(19) Europäisches Patentamt
European Patent Office
Office européen des brevets

(11) Publication number: 0 195 497
B1

(12) # EUROPEAN PATENT SPECIFICATION

(45) Date of publication of patent specification: 12.07.89

(51) Int. Cl.⁴: **C 08 F 4/64**, C 08 F 10/00

(21) Application number: 86300572.4

(22) Date of filing: 28.01.86

(54) **Catalyst component for olefin polymerization.**

(30) Priority: 28.01.85 JP 12649/85

(43) Date of publication of application: 24.09.86 Bulletin 86/39

(45) Publication of the grant of the patent: 12.07.89 Bulletin 89/28

(84) Designated Contracting States: BE DE FR GB IT NL SE

(56) References cited:
EP-A-0 086 643

PATENTS ABSTRACTS OF JAPAN, vol. 7, no. 285 (C-201)1430r, 20th December 1983; & JP-A-58 162 607 (MITSUI TOATSU KAGAKU K.K.) 27-09-1983

(73) Proprietor: TOA NENRYO KOGYO KABUSHIKI KAISHA
1-1 Hitotsubashi, 1-Chome Chiyoda-Ku
Tokyo 100 (JP)

(72) Inventor: Furuhashi, Hiroyuki
1902-5, Ooaza Kamekubo Ooi-machi
Iruma-gun Saitama-ken (JP)
Inventor: Yamamoto, Tadashi
8-311, Shimoda-cho 5 chome Kohoku
Yokohama-shi Kanagawa-ken (JP)
Inventor: Imai, Masafumi
1902-5, Ooaza Kamekubo Ooi-machi
Iruma-gun Saitama-ken (JP)
Inventor: Ueno, Hiroshi
398-1, Ooaza Haneo Namagawa-machi
Hiki-gun Saitama-ken (JP)

(74) Representative: Northover, Robert Frank et al
ESSO Chemical Limited Esso Chemical Research Centre P.O. Box 1
Abingdon Oxfordshire, OX13 6BB (GB)

EP 0 195 497 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of industrial application

The present invention relates to a catalyst component for olefin polymerization.

Prior art

It is known that if the titanium halide component of the Ziegler-Natta catalyst is supported on a magnesium halide, the catalytic activity per unit weight of titanium is improved. This technology, however, has a disadvantage in that the catalyst solids contain a large amount of halogen which, in turn, remains in the polymer to cause polymer degradation and equipment corrosion at the time of molding.

On the other hand, there have been proposed some technologies of using a halogen-free magnesium compound to reduce the halogen content in the catalyst solid. However, they are not so effective in reducing the amount of halogen contained in the catalyst solid.

For the same purposes, there have been proposed several catalyst components in which a transition metal is supported on a metal oxide such as silica and alumina. For example, there is disclosed a catalyst component produced by contacting a reaction product of a metal oxide and a magnesium dialkoxide with an electron donor compound and a tetravalent titanium halide compound (Japanese Patent Laid-Open No. 162607/1983). The electron donor compound is essentially a benzoate ester and the catalytic activity of the resulting catalyst is not necessarily industrially satisfactory.

Problems to be solved by this invention

It is an object of the present invention to provide a catalyst supported on a metal oxide which exhibits high activity and high stereoregularity when used for homopolymerization of an olefin, especially an alpha-olefin such as propylene, and copolymerization of such an olefin with other olefins.

Means to solve the problems

Summary of the invention

The present inventors carried out a series of researches which led to the findings that the object of the invention is achieved with a catalyst component which is obtained by contacting a metal oxide, a magnesium compound containing a hydrocarbyloxy group, a polybasic aromatic acid having a carboxyl group at the ortho position or a derivative thereof, and a titanium compound with one another. The present invention was completed based on these findings.

Accordingly, the gist of the present invention resides in a process for producing a catalyst component for olefin polymerization which is formed by contucting (A) a metal oxide, (B) a magnesium compound containing a hydrocarbyloxy group, (C) a polybasic aromatic acid having a carboxyl group at the ortho position or a derivative thereof, and (D) a titanium compound with one another.

Raw materials for preparation of catalyst component

(A) Metal oxide

The metal oxide used in this invention is an oxide of a metal selected from the group of elements in Groups II to IV of the Periodic Table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferable among them are $B_2O_3$, MgO, $Al_2O_3$, $SiO_2$, $TiO_2$, and $ZrO_2$. Especially preferable is $SiO_2$. Additional examples of the metal oxides are such complex oxides containing the metal oxides as $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO.

Fundamentally, the above-mentioned metal oxides and complex oxides should preferably be anhydrous. However, they may contain a very small amount of hydroxide which is usually present. In addition, they may contain impurities in such an amount that they do not considerably impairthe properties of the metal oxides. The permissible impurities are oxides, carbonates, sulfates, and nitrates such as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

Usually the metal oxide is used in the form of powder. The particle size and shape of the powder should be properly adjusted because they affect the form of the resulting olefin polymer. In addition, the metal oxide should preferably be calcined, prior to use, at as high a temperature as possible to remove poisonous substances, and the calcined metal oxide should be isolated from the atmosphere during handling.

(B) Hydrocarbyloxy group-containing magnesium compound

The alkoxyl group-containing magnesium compound used in this invention is represented by the formula

$$Mg(OR^1)_p(OR^2)_qR^3_rR^4_sX_t$$

(where $R^1$, $R^2$, $R^3$, and $R^4$ are the same or different alkyl, alkenyl, cycloalkyl, aryl or aralkyl group having 1 to 20 carbon atoms, preferably 1 to 15 carbon atoms, X is a halogen atom, p or q>0, and p+q+r+s+t=2.

The following are examples of the compounds represented by the formula above.

(1) Magnesium dihydrocarbyloxide represented by $Mg(OR^1)_p(OR^2)_{2-p}$

Examples of this compound are

$Mg(OCH_3)_2$, $Mg(OC_2H_5)_2$, $Mg(OCH_3)(OC_2H_5)$, $Mg(Oi\text{-}C_3H_7)_2$, $Mg(OC_3H_7)_2$, $Mg(OH_4H_9)_2$, $Mg(Oi\text{-}C_4H_9)_2$, $Mg(OC_4H_9)(Oi\text{-}C_4H_9)$, $Mg(OC_4H_9)(Osec\text{-}C_4H_9)$, $Mg(OC_6H_{13})_2$, $Mg(OC_8H_{17})_2$, $Mg(OC_6H_{11})_2$, $Mg(OC_6H_5)_2$, $Mg(OC_6H_4CH_3)_2$, $Mg(OCH_2C_6H_5)_2$, $Mg[O\text{-}2(C_2H_5)\cdot C_6H_{12}]_2$, $Mg(Oi\text{-}C_7H_{15})_2$, $Mg(Oi\text{-}C_8H_{17})_2$, and $Mg[OC(CH_3)_2C_4H_9]_2$.

These compounds may be obtained commercially or they may be produced by the known method such as reacting metallic magnesium or a dihydrocarbyl magnesium such as diethyl magnesium, butyl ethyl magnesium, dibutyl magnesium, and diphenyl magnesium, with at least one alcohol such as ethanol, butanol, 2-ethylhexanol, and phenol, orthocarboxylate esters such as ethyl orthocarbonate, ethyl orthoformate, phenyl orthoformate, and ethyl orthobenzoate, alkoxyl group-containing silicon compounds such as tetraethoxysilane and phenyltriethoxysilane, alkoxyl group-containing phosphorus compounds such as triethyl phosphite and triphenyl phosphite, and alkoxyl group-containing boron compounds such as triethyl borate and tributyl borate.

The dihydrocarbyl magnesium used for the above-mentioned purpose may be a mixture or complex compound with other organometallic compounds such as triethyl aluminum, triethyl boron, diethyl beryllium, and diethyl zinc.

(2) Hydrocarbyloxymagnesium halide represented by $Mg(OR)_pX_{2-p}$

This compound is obtained by partial halogenation of the above-mentioned magnesium dialkoxide with a halogenating agent such as aluminum chloride, silicon tetrachloride, phosphorus pentachloride, phosphorus oxychloride, and thionyl chloride, or by reaction with a magnesium halide such as $MgCl_2$.

Additional examples of those compounds obtained by (a) the reaction of a Grignard compound with or (b) the reaction of metallic magnesium and hydrocarbyl halide with at least one of the above-mentioned alcohols, orthocarboxylate esters, alkoxyl group-containing silicon compounds, alkoxyl group-containing phosphorus compounds, and alkoxyl group-containing boron compounds.

(3) Hydrocarbyloxymagnesium halide represented by $Mg(OR^1)_pR^3_rX_t$ (where t>0)

Examples of this compound include ethylethoxymagnesium chloride, ethylphenoxymagnesium chloride, butylethoxymagnesium chloride, butylhexyloxymagnesium chloride, isobutylisobutoxymagnesium chloride, and phenylethoxymagnesium bromide. These compounds may be prepared by partial alkoxylation of a Grignard compound with any one of the alcohols, orthocarboxylate esters, or alkoxyl group-containing compounds mentioned in the preceding paragraph (1).

(4) Hydrocarbylmagnesium hydrocarbyloxide represented by $Mg(OR^1)_p(OR^2)_qR^3_rR^4_s$.

Examples of this compound are

$Mg(CH_3)(OCH_3)$, $Mg(CH_3)(OC_2H_5)$, $Mg(C_2H_5)(OCH_3)$, $Mg(C_2H_5)(OC_2H_5)$, $Mg(C_2H_5)(OH_4H_9)$, $Mg(C_2H_5)(OC_6H_{13})$, $Mg(C_2H_5)(OC_8H_{17})$, $Mg(C_2H_5)(OC_6H_5)_2$, $Mg(C_4H_9)(OC_2H_5)$, $Mg(C_6H_{13})(OC_6H_{13})$, $Mg(C_8H_{17})(OC_8H_{17})$, and $Mg(C_6H_5)(OC_6H_5)$.

These compounds may be obtained commercially or they may be produced by the known method such as reacting dihydrocarbyl magnesium with an alcohol to change a part of the hydrocarbyl group into an alkoxyl group.

(C) Polybasic aromatic carboxylic acid having a carboxyl group at the ortho position and derivatives thereof

Examples of the carboxylic acid include phthalic acid, trimellitic acid, hemimellitic acid, pyromellitic acid, and mellophannic acid.

The derivative of the carboxylic acid denotes acid anhydrides, acid halides, acid monoesters, polyesters, acid amide, nitriles, and imides of the carboxylic acid.

Examples of the derivatives include acid anhydrides such as phthalic anhydride, trimellitic anhydride; acid halides such as phthalic acid dichloride, phthalic acid monochloride, phthalic acid ethylchloride, phthalic acid n-butylchloride, phthalic acid dibromide, trimellitic acid trichloride, and trimellitic acid diethylchloride; acid monoesters such as mono(methyl, ethyl, n-butyl, hexyl, and 2-ethylhexyl) phthalate; polyesters such as di(methyl, ethyl, isopropyl, n-butyl, isobutyl, hexyl, 2-ethylhexyl, decyl, aryl, cyclohexyl, and phenyl) phthalate di(ethyl and n-butyl) trimellitate, tri(ethyl, isobutyl, n-butyl, hexyl, and 2-ethylhexyl) trimellitate, tetramethyl mellophannate, and tetraethyl pyromellitate; acid amides such as phthalamide and phthaldiamide; and phthalnitrile and phthalimide. The above-mentioned carboxylic acids and derivatives thereof may be used in combination with one another.

(D) Titanium compound

The titanium compound used in this invention is a compound of divalent, trivalent, or tetravalent titanium. Examples of the compound include titanium tetrachloride, titanium tetrabromide, trichloroethoxytitanium, trichlorobutoxytitanium, dichlorodiethyoxytitanium, dichlorodibutoxytitanium, dichlorodiphenoxytitanium, chlorotriethoxytitanium, chlorotributoxytitanium, tetrabutoxytitanium, and

titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

According to this invention, a catalyst component is prepared by contacting a metal oxide (component A), an alkoxyl group-containing magnesium compound (component B), a phthalate ester (component C), and a titanium compound (component D) with one another.

The contacting of the four components may be accomplished, for example, in the following manners.

(1) Component A and component B are contacted with each other and the resulting contact product is contacted with component C and component D simultaneously or individually.

(2) Component A, component B, and component C are contacted with one another simultaneously or individually, and the resulting contact product is contacted with component D.

(3) Component A, component B, component C and component D are contacted with one another simultaneously.

Contacting methods (1) and (2) are preferable. They are explained in the following.

Method (1)

(i) Contacting of component A with component B

The contacting of component A with component B is accomplished by mixing and stirring or mechanically copulverizing the two components in the presence or absence of an inert medium. Examples of the inert medium include hydrocarbons such as pentane, hexane, heptane, octane, decane, cyclohexane, benzene, toluene, and xylene; and halogenated hydrocarbons such as 1,2-dichloroethane, 1,2-dichloropropane, carbon tetrachloride, butyl chloride, isoamyl chloride, bromobenzene, and chlorotoluene.

It is possible to form the contacting of component A with component B by synthesizing component B in the presence of component A in the above-mentioned manner.

Usually the contacting of component A with component B is performed at −20°C to 150°C for 0.1 to 100 hours. Where the contacting is accompanied by abrupt heat generation, the components may be mixed little by little at a low temperature in the initial stage, and after the mixing of all the components is complete, the temperature of the mixture may be increased and contacting may be continued. The molar ratio (B/A) of component A and component B in the contacting step is 0.01 to 10.

The contacting by mechanical copulverization may be accomplished by using a grinder, such as rotary ball mill, vibratory ball mill, and impact mill, which is commonly used to obtain grinds. The copulverization may be accomplished, if necessary, under reduced pressure or in an inert gas atmosphere, in the substantial absence of moisture and oxygen.

(ii) Contacting with component C and component D

The contact product of component A and component B (referred to as contact product (a) hereinafter) is subsequently contacted with component C and component D. Before contacting with component C and component D, the contact product (a) may be washed with a proper cleaning agent such us the above-mentioned inert medium.

The contacting of the contact product (a) with component C and component D may be accomplished by (1) contacting it with component C and then contacting the resulting contact product with component D, (2) contacting it with component D and then contacting the resulting contact product with component C, or (3) contacting it with component C and component D simultaneously.

The above-mentioned contacting may be accomplished by mixing and stirring or mechanically copulverizing the contact products and components in the presence or absence of an inert medium. Mixing and stirring in the presence or absence of an inert medium is preferable. Examples of the inert medium are as mentioned above.

The contacting of contact product (b) with component C and component D and is usually accomplished at 0 to 200°C for 0.1 to 100 hours in the case of mechanical copulverization, and at 0 to 200°C for 0.5 to 20 hours in the case of mixing and stirring.

The amount of component C is 0.005 to 10 gram-mol, preferably 0.01 to 1 gram-mol, per gram-atom of magnesium in contact product (a). The amount of component D is 0.1 gram-mol or above, preferably 1 to 50 gram-mol, per gram-atom of magnesium in contact product (a).

The contacting of contact product (a) with component D may be performed twice or more, if necessary, in the same manner as mentioned above. In this case, the resulting contact product obtained first may be washed with an inert medium, and then the washed contact product is contacted further with additional fresh component D (and additional medium).

Where the contacting with component D is performed twice or more, the contact product may be contacted with an inert hydrocarbon, halogenated hydrocarbon, or metal halide compound in the interval between the preceding contact and the succeeding contact.

The inert hydrocarbon that can be used in the contacting step is an aliphatic, alicyclic, or aromatic hydrocarbon. Their examples are n-hexane, methylhexane, dimethylhexane, ethylhexane, ethylmethylpentane, n-heptane, methylheptane, trimethylpentane, dimethylheptane, ethylheptane,

trimethylhexane, trimethylheptane, n-octane, methyloctane, dimethyloctane, n-undecane, n-dodecane, n-tridecane, n-tetradecane, n-pentadecane, n-hexadecane, n-octadecane, n-nonadecane, n-eicosane, cyclopentane, cyclohexane, methylcyclopentane, cycloheptane, dimethylcyclopentane, methylcyclohexane, ethylcyclopentane, dimethylcyclohexane, ethylcyclohexane, cyclooctane, indan, n-butylcyclohexane, isobutylcyclohexane, adamantane, benzene, toluene, xylene, ethylbenzene, tetramethylbenzene, n-butylbenzene, isobutylbenzene, propyltoluene, decaline, and tetralin.

The halogenated hydrocarbon that can be used in the contacting step is a mono or poly-halogen substituted saturated or unsaturated aliphatic, alicyclic, or aromatic hydrocarbon having 1 to 12 carbon atoms. Their examples derived from an aliphatic compound are methyl chloride, methyl bromide, methyl iodide, methylene chloride, methylene bromide, methylene iodide, chloroform, bromoform, iodoform, carbon tetrachloride, carbon tetrabromide, carbon tetraiodide, ethyl chloride, ethyl bromide, ethyl iodide, 1,2-dichloroethane, 1,2-di-bromoethane, 1,2-diiodoethane, methylchloroform, methylbromoform, methyliodoform, 1,1,2-trichloroethylene, 1,1,2-tribromoethylene, 1,1,2,2-tetrachloroethylene, pentachloroethane, hexachloroethane, hexabromoethane, n-propyl chloride, 1,2-dichloropropane, hexachloropropylene, octachloropropane, decabromobutane, and chlorinated paraffin. The examples derived from an alicyclic compound are chlorocyclopropane, tetrachlorocyclopentane, hexachloropentadiene, and hexachlorocyclohexane. The examples derived from an aromatic compound are chlorobenzene, bromobenzene, o-dichlorobenzene, p-dichlorobenzene, hexachlorobenzene, hexabromobenzene, benzotrichloride, and p-chlorobenzotrichloride. These compounds may be used individually or in combination with one another.

The metal halide compound is the halide of an element selected from the group of elements in Groups IIIa, IVa, and Va of the Periodic Table (called a metal halide hereinafter). They include the chloride, fluoride, bromide, and iodide of B, Al, Ga, In, Tl, Si, Ge, Sn, Pb, As, Sb, and Bi. Preferable among them are $BCl_3$, $BBr_3$, $AlCl_3$, $AlBr_3$, $AlI_3$, $GaCl_3$, $GaBr_3$, $InCl_3$, $TlCl_3$, $SiCl_4$, $SnCl_4$, $SbCl_5$, and $SbF_5$.

Where the contacting with component D is performed twice or more, the intermediate contact product is contacted, if necessary, with an inert hydrocarbon, halogenated hydrocarbon, or metal halide (called component E hereinafter) in the interval between the preceding contact and the succeeding contact. This contact is performed at 0 to 200°C for 5 minutes to 20 hours, preferably at 20 to 150°C for 10 minutes to 5 hours. Where component E is a liquid substance, it is used in such an amount that contact product (a) is 1 to 1000 g per liter of component E. Where component E is a solid substance, it is preferable to use it in the form of solution. It is used in such an amount that the amount of contact product (a) is 0.01 to 100 g per g of component E.

After the contacting of contact product (a) with component D, the resulting contact product may be contacted further with component E in the same manner as mentioned above.

Method (2)

(i) Contacting of component A, component B, and component C with one another

The contacting of component A, component B, and component C with one another is accomplished by mixing and stirring or mechanically copulverizing the three components in the presence or absence of an inert medium. The inert medium is the same as that used in paragraph (i) in Method (1) mentioned above.

The contacting of component A, component B, and component C with one another is accomplished in the order mentioned below. (1) Component A and component B are contacted with each other, and the resulting contact product is contacted with component C. (2) Component A and component C are contacted with each other, and the resulting contact product is contacted with component B. (3) Component A, component B, and component C are contacted with one another simultaneously. Among these three methods, the third method (3) is preferable.

The contacting of component A, component B, and component C with one another may be accomplished by synthesizing component B in the above-mentioned method.

Usually the contacting of component A, component B, and component C with one another is performed at −20°C to 150°C for 0.1 to 100 hours. Where the contacting is accompanied by abrupt heat generation, the components may be mixed little by little at a low temperature in the initial stage, and after the mixing of all the components is complete, the temperature of the mixture may be increased and contacting may be continued.

The molar ratio of component A, component B, and component C is B/A=0.01 to 10 and C/B=0.01 to 10.

(ii) Contacting with component D

The contact product of component A, component B, and component C (referred to as contact product (b) hereinafter) is subsequently contacted with component D, thereby to produce the desired catalyst component.

The contacting of contact product (b) with component D may be accomplished in the same manner as used in contacting contact product (a) with component D as mentioned in paragraph (ii) in Method (1) above.

As in the above-mentioned Method (1)-(ii), contacting with component D may be performed twice or more. In such a case, the intermediate contact product is contacted, if necessry, with component E in the interval between the preceding contact and the succeeding contact, as mentioned in Method (1)-(ii).

Furthermore, contact product (b) may be contacted with component C in addition to component D. The contacting with component C may be performed in the same manner as in Method (1)-(ii) above, (1) before contacting with component D, (2) after contacting with component D, or (3) simultaneously with contacting with component D.

In addition, the contact product of contact product (b) with component D (also the contact product of contact product (b) with component E or component C) may be contacted further with component E in the same manner as in Method (1)-(ii) mentioned above.

The catalyst component obtained as mentioned above is washed, if necessary, with an inert hydrocarbon such as hexane, heptane, octane, cyclohexane, benzene, toluene, and xylene followed by drying.

The catalyst component of this invention is a powder having a specific surface area of 10 to 1000 $m^2/g$ as measured by the BET method at the adsorption temperature of liquid nitrogen, a pore volume of 0.05 to 5 $cm^3/g$, and a narrow particle size distribution with uniform particle size. It is composed of 3 to 90 wt.% of metal oxide, 1 to 25 wt.% of magnesium, 0.5 to 10 wt.% of titanium, and 4 to 60 wt.% of chlorine.

Catalyst for olefin polymerization

The catalyst component of this invention is combined with an organic compound of a metal in Groups I to III of the Periodic Table, to be made into a catalyst for homopolymerization of an olefin or for copolymerization of an olefin with another olefin.

Organic compound of metal in Groups I to III

An organic compound of lithium, magnesium, calcium, zinc, or aluminum can be used as the organometallic compound. Among these organometallic compounds, an organoaluminum compound is preferable. The organoaluminum compound that can be used is represented by the formula $R_nAlX_{3-n}$ (where R is an alkyl group or aryl group; X is a halogen atom, alkoxyl group, or hydrogen atom; and n is a number in the range of $1 \leq n \leq 3$). Preferred ones are $C_1$ to $C_{18}$, preferably $C_2$ to $C_6$ alkyl aluminum compounds and mixtures thereof and complex compounds thereof such as trialkyl aluminum, dialkyl aluminum monohalide, monoalkyl aluminum dihalide, alkyl aluminum sesquihalide, dialkyl aluminum monoalkoxide, and dialkyl aluminum monohydride. Their examples include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride, monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among these compounds is trialkyl aluminum, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are $(C_2H_5)_2AlOAl(C_2H_5)_2$, $(C_4H_9)_2AlOAl(C_4H_9)_2$, and

$$(C_2H_5)_2Al\underset{\displaystyle C_2H_5}{\underset{|}{N}}Al(C_2H_5)_2.$$

Other organometallic compounds than organoaluminum compounds are diethyl magnesium, ethyl magnesium chloride, diethyl zinc, $LiAl(C_2H_5)_4$, and $LiAl(C_7H_{15})_4$.

The organometallic compound may be used alone or in combination with an electron donor compound.

The electron donor compound includes carboxylic acids, carboxylic acid anhydrides, carboxylic acid esters, carboxylic acid halides, alcohols, ethers, ketones, amines, amides, nitriles, aldehydes, alcoholates, phosphamides, thioesters, thioesters, carbonic acid esters, and compounds of phosphorus, arsenic, or antimony attached to an organic group through a carbon or oxygen atom. Preferable among them are carboxylic acids, carboxylic acid anhydrides, carboxylic acid esters, carboxylic acid halides, alcohols, and ethers.

Examples of the carboxylic acids include aliphatic monocarboxylic acids such as formic acid, acetic acid, propionic acid, butyric acid, isobutyric acid, valeric acid, caproic acid, pivalic acid, acrylic acid, methacrylic acid, and crotonic acid; aliphatic dicarboxylic acids such as malonic acid, succinic acid, glutaric acid, adipic acid, sebasic acid, maleic acid, and fumaric acid; aliphatic hydrocarboxylic acids such as

tartaric acid; alicyclic carboxylic acids such as cyclohexane monocarboxylic acid, cyclohexene monocarboxylic acid, cis-1,2-cyclohexane dicarboxylic acid, and cis-4-methylcyclohexene - 1,2 - dicarboxylic acid; aromatic monocarboxylic acids such as benzoic acid, toluic acid, anisic acid, p-tertiary-butylbenzoic acid, naphthoic acid, and cinnamic acid; and aromatic dicarboxylic acids such as phthalic acid, isophthalic acid, terephthalic acid, and naphthalic acid.

The carboxylic acid anhydrides are anhydrides of the above-mentioned carboxylic acids in the form of anhydrides.

The carboxylic acid esters are monoesters and diesters of the above-mentioned carboxylic acids. Their examples include butyl formate, ethyl acetate, butyl butyrate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarbonate, methyl benzoate, ethyl benzoate, methyl p-toluylate, ethyl p - tertiary - butylbenzoate, ethyl p - anisate, ethyl alpha - naphthoate, isobutyl alpha - naphthoate, ethyl cinnamate, monomethyl phthalate, dibutyl phthalate, diisobutyl phthalate, dihexyl phthalate, dioctyl phthalate, di - 2 - ethylhexyl phthalate, diaryl phthalate, diphenyl phthalate, diethyl isophthalate, diisobutyl isophthalate, diethyl terephthalate, dibutyl terephthalate, diethyl naphthalate, and dibuytyl naphthalate.

The carboxylic acid halides are halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutaric acid chloride, glutaric acid bromide, adipic acid chloride, adipic acid bromide, sebasic acid chloride, sebasic acid bromide, maleic acid chloride, maleic acid bromide, fumaric acid chloride, fumaric acid bromide, tartaric acid chloride, tartaric acid bromide, cyclohexane carboxylic acid chloride, cyclohexane carboxylic acid bromide, 1 - cyclohexene carboxylic acid chloride, cis - 4 - methylcyclohexane carboxylic acid chloride, cis - 4 - methylcyclohexene carboxylic acid bromide, benzoyl chloride, benzoyl bromide, p - toluic acid chloride, p - toluic acid bromide, p - anisic acid chloride, p - anisic acid bromide, alphanaphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthalic acid dichloride. Additional useful compounds include dicarboxylic acid monoalkylhalides such as adipic acid monomethylchloride, maleic acid mono-ethylchloride, and maleic acid monomethylchloride.

The alcohols are those compounds represented by the formula ROH, where R is a $C_1$ to $C_{12}$ alkyl, alkenyl, cycloalkyl, aryl, or aralkyl group. Examples of the alcohols include methanol, ethanol, propanol, isopropanol, butanol, isobutnol, pentanol, hexanol, octanol, 2 - ethylhexanol, cyclohexanol, benzyl alcohol, allyl alcohol, phenol, cresol, xylenol, ethylphenol, isopropylphenol, p - tertiarybutylphenol and n - octylphenol.

The ethers are those compounds represented by the formula ROR', where R and R' are $C_1$ to $C_{12}$ alkyl, alkenyl, cycloalkyl, aryl, or aralkyl groups. R and R' may be the same or different. Examples of the ethers include diethyl ether diisopropyl ether, dibutyl ether, diisobutyl ether, diisoamyl ether, di - 2 - -ethylhexyl ether, diallyl ether, ethylallyl ether, butylallyl ether, diphenyl ether, anisole, and ethylphenyl ether.

Other useful electron donor compounds than the above-mentioned organosilicon compounds are those which contain a hetero atom such as nitrogen, sulfur, oxygen, and phosphorus.

Examples of the organosilicon compounds include tetramethoxysilane, tetraethoxysilane, tetrabutoxysilane, tetraisobutoxysilane, tetraphenoxysilane, tetra(p - methylphenoxy)silane, tetrabenzyloxy-silane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxy-silane, butyltributoxysilane, butyltriphenoxysilane, isobutyltriisobutoxysilane, vinyltriethoxysilane, aryltrimethoxysilane, phenyltrimethoxysilane, phenyltriethoxysilane, benzyltriphenoxysilane, methyltriaryloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diaryl-dipropoxysilane, diphenyldiaryloxysilane, methylphenyldimethoxysilane, chlorophenyldiethoxysilane.

Examples of the electron donor compound containing a hetero atom are given below. Those which contain a nitrogen atom include 2,2,6,6 - tetramethylpiperidine, 2,6 - dimethylpiperidine, 2,6 - diethyl-piperidine, 2,6 - diisopropylpiperidine, 2,6 - diisobutyl - 4 - methylpiperidine, 1,2,2,6,6 - pentamethyl-piperidine, 2,2,5,5 - tetramethylpyrrolidine, 2,5 - dimethylpyrolidine, 2,5 - diethylpyrrolidine, 2,5 - diisopropylpyrrolidine, 1,2,2,5,5 - pentamethylpyrrolidine, 2,2,5 - trimethylpyrrolidine, 2 - methylpyridine, 3 - methylpyridine, 4 - methylpyridine, 2,6 - diisopropylpyridine, 2,6 - diisobutylpyridine, 1,2,4 - trimethylpiperidine, 2,5 - dimethylpiperidine, methyl nicotinate, ethyl nicotinate, nicotinamide, benzoic

amide, 2 - methylpyrrole, 2,5 - dimethylpyrrole, imidazole, toluylic amide, benzonitrile, acetonitrile, aniline, paratoluidine, orthotoluidine, metatoluidine, triethylamine, diethylamine, dibutylamine, tetramethylenediamine, and tributylamine. Those which contain a sulfur atom include thiophenol, thiophene, ethyl 2 - thiophenecarboxylate, ethyl 3 - thiophenecarboxylate, 2 - methylthiophene, methylmercaptan, ethylmercaptan, isopropylmercaptan, butyl mercaptan, diethyl thioether, diphenyl thioether, methyl benzenesulfonate, methyl sulfite, and ethyl sulfite. Those which contain an oxygen atom include tetrahydrofuran, 2 - methyltetrahydrofuran, 3 - methyltetrahydrofuran, 2 - ethyltetrahydrofuran, 2,2,5,5 - tetraethyltetrahydrofuran, 2,2,5,5 - tetramethyltetrahydrofuran, 2,2,6,6-tetraethyltetrahydropyran, 2,2,6,6 - tetrahydropyran, dioxane, dimethyl ether, diethyl ether, dibutyl ether, diisoamyl ether, diphenyl ether, anisole, acetophenone, acetone, methyl ethyl ketone, acetyl acetone, o - tolyl - t - butyl ketone, methyl - 2,6 - di - t - butyl phenyl ketone, ethyl 2 - furoate, isoamyl 2 - furoate, methyl 2 - furoate, and propyl 2 - furoate. Those which contain a phosphorus atom include triphenyl phosphine, tributyl phosphine, triphenyl phosphite, tribenzyl phosphite, diethyl phosphate, and diphenyl phosphate.

The catalyst component prepared according to the process of this invention exhibits a high catalytic activity when combined with one of the above-mentioned electron donor compound, particularly an organosilicon compound.

Two kinds or more of the electron donor compounds may be used. They may be used when the catalyst component is combined with an organometallic compound or used after the contacting with an organometallic compound.

Usually the organometallic compound is used in an amount of 1 to 2000 gram-mol, particularly 20 to 500 gram-mol, per gram-atom of titanium in the catalyst component of this invention.

The amount of the organometallic compound is 0.1 to 40 gram-atom, preferably 1 to 25 gram-atom in terms of aluminum per mol of the electron donor compound.

Polymerization of olefins

The catalyst composed of the catalyst component obtained as mentioned above and an organometallic compound (and an electron donor compound) is useful for homopolymerization of monoolefin having 2 to 10 carbon atoms and copolymerization of a monoolefin having 2 to 10 carbon atoms with another monoolefin or a diolefin having 3 to 10 carbon atoms. It is an outstanding catalyst for homopolymerization of alpha-olefins, particularly $C_3$ to $C_6$ alpha-olefins, such as propylene, 1 - butene, 4 - methyl - 1 - pentene, and 1 - hexene; and for random and block copolymerization of the above-mentioned alpha-olefins with one another and/or with ethylene.

The polymerization may be performed in either gas phase or liquid phase. The liquid phase polymerization may be accomplished in an inert hydrocarbon such as n-butane, isobutane, n - pentane, isopentane, hexane, heptane, octane, cyclohexane, benzene, toluene, and xylene; or in the liquid monomer. The polymerization temperature is usually −80°C to +150°C, preferably 40 to 120°C. The polymerization pressure is 1 to 60 atm. The molecular weight modification of the resulting polymer is accomplished by the aid of hydrogen or any known molecular weight modifier present in the system. In the case of copolymerization, the quantity of an olefin to be copolymerized is usually less than 30 wt.%, particularly 0.3 to 15 wt.%, based on the principal olefin. The polymerization with the catalyst system of this invention may be performed continuously or batchwise under the commonly used conditions. The copolymerization may be accomplished in one step or in two or more steps.

Effect of the invention

The catalyst component of this invention is effective for the production of polyolefins, particularly isotactic polypropylene, ethylene - propylene random copolymers, and ethylene-propylene block copolymers.

The polymerization catalyst containing the catalyst component of this invention has a high polymerization activity and high stereoregularity and keep the high activity for a long period at the time of polymerization. In addition, it provides polyolefin powder having a high bulk density and good flowability.

Examples

The invention is now described in more detail with reference to the following examples and application examples, which should not be construed to limit the scope of the invention. Percent (%) in the examples and application examples means wt%, unless otherwise indicated.

The heptane insolubles (abbreviated as HI hereinafter) which indicate the ratio of the crystalline phase in the polymer are the amount of the polymer which remains undissolved when the polymer is extracted with boiling n-heptane for 6 hours in a Soxhlet apparatus of improved type.

Melt flow rate (MFR) was measured according to ASTM D1238, and bulk density was measured according to ASTM D1895-69, method A.

Example 1

Contacting of silicon oxide with n-butylethyl magnesium

In a 200-ml flask equipped with a dropping funnel and stirrer, with the atmosphere therein replaced with nitrogen, were placed 5 g of silicon oxide (abbreviated as $SiO_2$ hereinafter) and 20 ml of n-heptane.

(The silicon oxide is G-952, a product of Davison, having a specific surface area of 302 $m^2/g$, a pore volume of 1.54 $m^3g$, and an average pore diameter of 204 A. Prior to use, it was calcined in a nitrogen stream at 200°C for 5 hours, and then at 700°C for 5 hours). Further, there was added at room temperature 20 ml of 20% solution of n-butylethylmagnesium (abbreviated as BEM hereinafter) in n-heptane (Magala BEM, a product of Texas Alkyls, containing 26.8 mmol of BEM), followed by stirring at 90°C for 2 hours. The supernatant liquid was removed by decantation and the resulting solid substance was washed with 50 ml of n-heptane at room temperature. The supernatant liquid was removed by decantation. The washing with n-heptane was repeated four times. A portion of the washed solid substance was dried and analyzed. It was found to contain 5.1% of magnesium.

Contacting with ethanol

The solid substance obtained in the above-mentioned step was suspended in 20 ml of n-heptane. To the resulting suspension was added a solution containing 2.9 g (64 mmol) of ethanol in 10 ml of n-heptane from a dropping funnel at 0°C over 15 minutes. The mixture was stirred at 0°C for 1 hour and then heated to 80°C over 1 hour, and stirring was continued at 80°C for 1 hour. After the reaction was complete, the resulting solid substance was washed with four 50 ml portions of n-heptane at room temperature. The solid substance (designated as solid component I) was found to contain 76.8% of $SiO_2$, 5.0% of magnesium, and 15.8% of ethoxy group. The solid substance was also found to have a specific surface area of 248 $m^2/g$ and a pore volume of 0.74 $cm^3/g$.

Contacting with di-n-butyl phthalate and titanium tetrachloride

To the solid component I obtained in the above-mentioned step were added 20 ml of toluene and 0.6 g of di-n-butyl phthalate, followed by reaction at 50°C for 2 hours. Then 30 ml of titanium tetrachloride was added, followed by reaction at 90°C for 2 hours. The resulting solid substance was washed with eight 50 ml portions of n-hexane at room temperature and dried under reduced pressure at room temperature for 1 hour. There was obtained 7.5 g of catalyst component having a specific surface area of 253 $m^2/g$ and a pore volume of 0.82 $cm^3/g$. The catalyst component was found to contain 55.9% of $SiO_2$, 4.4% of magnesium, 16.2% of chlorine, and 3.6% of titanium.

Example 2

After the contacting with titanium tetrachloride in Example 1, the supernatant liquid was removed by decantation, and the solid substance was washed with 50 ml of toluene at 90°C for 15 minutes. Washing with toluene was repeated. 20 ml of toluene and 30 ml of titanium tetrachloride were added, followed by reaction at 90°C for 2 hours. The resulting substance was washed with n-hexane and dried in the same manner in Example 1. Thus there was obtained 7.4 g of catalyst component having a specific surface area of 241 $m^2/g$ and a pore volume of 0.88 $cm^3/g$. The catalyst component was found to contain 56.2% of $SiO_2$, 4.4% of magnesium, 15.7% of chlorine, and 3.3% of titanium.

Example 3

A catalyst component containing 3.2% of titanium was prepared in the same manner as in Example 2, except that di-n-butyl phthalate and titanium tetrachloride were added simultaneously when the solid component I was contacted with di-n-butyl phthalate and titanium tetrachloride.

Example 4

A catalyst component containing 3.2% of titanium was prepared in the same manner as in Example 2, except that when the solid component I was contacted with di-n-butyl phthalate and titanium tetrachloride, 30 ml of titanium tetrachloride was added, followed by rapid heating to 90°C with stirring, and then 0.6 g of di-n-butyl phthalate was added, followed by reaction at 90°C for 2 hours.

Example 5

To solid component I obtained in Example 1 was added 50 ml of titanium tetrachloride, followed by rapid heating to 90°C with stirring, and then 0.6 g of di-n-butyl phthalate was added, with reaction at 90°C for 2 hours. After the completion of reaction, the supernatant liquid was removed and 50 ml of titanium tetrachloride was added, followed by reaction at 90°C for 2 hours. The resulting solid substance was washed and dried in the same manner as in Example 1. Thus there was obtained a catalyst component containing 3.4% of titanium.

Examples 6 to 8

Example 2 was repeated except that component I was contacted with di-n-butyl phthalate and titanium tetrachloride was performed in the following manner. After the first reaction with titanium tetrachloride, the supernatant liquid was removed and 50 ml of toluene and 3 g of silicon tetrachloride were added (in Example 6), 50 ml of toluene and 3 g of aluminum trichloride were added (in Example 7), or 50 ml of toluene and 3 g of hexachloroethane were added (in Example 8), followed by reaction at 60°C for 1 hour. The resulting solid substance was washed with four 50 ml portions of toluene at 60°C, and then 20 ml of toluene and 30 ml of titanium tetrachloride were added for the second reaction with titanium tetrachloride. The

resulting solid substance was washed and dried in the same manner as in Example 1. There were obtained catalyst components each containing 2.9% of titanium (Example 6), 2.9% of titanium (Example 7), and 2.7% of titanium (Example 8).

Example 9

Solid component I was reacted with titanium tetrachloride and di-n-butyl phthalate in the same manner as in Example 2 to give a solid substance. This solid substance was washed 8 times with n-hexane and then dispersed in n-hexane to make a slurry (composed of 4.5 g of solid substance and 6.8 g of n-hexane). To the slurry was added 1.1 g of hexachloroethane and 100 ml of n-hexane, followed by contacting at 50°C for 30 minutes. The solid substance was filtered out at 50°C, followed by washing with 100 ml portions of n-hexane at room temperature and drying under reduced pressure for 1 hour. Thus there was obtained a catalyst component containing 2.4% of titanium.

Examples 10 to 13

Example 2 was repeated except that $SiO_2$ was replaced by the metal oxide shown below. Thus, there were obtained catalyst components each containing titanium as shown below.

| Example | Metal oxide | Conditions of calcination | Titanium content (%) |
|---|---|---|---|
| 10 | $Al_2O_3$ | 200°C/2 hours<br>700°C/5 hours | 3.5 |
| 11 | $(MgO)_2(SiO_2)_3$ | 200°C/2 hours<br>500°C/5 hours | 3.1 |
| 12 | A mixture of 1 kg of $SiO_2$ and 100 g of $Al_2O_3$ | 200°C/2 hours<br>700°C/5 hours | 2.6 |
| 13 | A mixture of 1 kg of $SiO_2$ and 20 g of $CrO_3$ | 200°C/2 hours<br>700°C/5 hours | 2.4 |

Examples 14 to 16

Example 2 was repeated except that BEM was replaced by the dihydrocarbyl magnesium shown below. Thus there were obtained catalyst components each containing titanium as shown below.

| Example | Dihydrocarbyl magnesium | Titanium content (%) |
|---|---|---|
| 14 | Di-n-hexylmagnesium (Magala DNHM, made by Texas Alkyls) | 3.1 |
| 15 | Di-n-butylmagnesium (0.5 mol)-triethyl aluminum (1 mol) complex, (Magala 0.5E, made by Texas Alkyls) | 3.0 |
| 16 | Di-n-butylmagnesium (7.5 mol)-triethyl aluminum (1 mol) complex, (Magala 7.5E, made by Texas Alkyls) | 3.1 |

Examples 17 to 23

Example 2 was repeated except that ethanol was replaced by the alcohol or alkoxyl group-containing compound shown below. Thus there were obtained catalyst components each containing titanium as shown below.

| Example | Alcohol or alkoxyl group-containing compound | Titanium content (%) |
|---|---|---|
| 17 | i-Butanol | 3.1 |
| 18 | 2-Ethylhexanol | 2.9 |
| 19 | Phenol | 2.6 |
| 20 | Tetraethoxysilane | 3.0 |
| 21 | Ethyl orthoformate | 3.3 |
| 22 | Triethyl phosphite | 3.2 |
| 23 | Triethyl borate | 3.2 |

Examples 24 to 31

Example 2 was repeated except that the solid component I was contacted with an electron donor compound shown below in place of di-n-butyl phthalate. Thus there were obtained catalyst components each containing titanium as shown below.

| Example | Electron donor compound | Titanium content (%) |
|---|---|---|
| 24 | Diethyl phthalate | 3.4 |
| 25 | Diisobutyl phthalate | 3.3 |
| 26 | Phthalic anhydride | 2.7 |
| 27 | Phthalic acid dichloride | 2.8 |
| 28 | n-Butylphthalate chloride | 3.1 |
| 29 | Mono-n-butyl phthalate | 3.0 |
| 30 | Phthalic acid | 3.0 |
| 31 | Tri-n-butyl trimellitic acid | 3.5 |

Example 32

Contacting of silicon oxide with ethanol

In a 200-ml flask equipped with a dropping funnel and stirrer, with the atmosphere therein replaced with nitrogen, were placed 5 g of silicon oxide (the one used in Example 1) and 40 ml of n-heptane and 2.9 g of ethanol. Contacting was performed at 70°C for 2 hours. After the completion of reaction, the solid substance was washed by decantation with 50 ml of n-heptane at room temperature.

Contacting with n-butylethyl magnesium

The solid substance obtained in the above-mentioned step was suspended in 20 ml of n-heptane. To the resulting suspension was added 11 ml of BEM solution (the one used in Example 1) from the dropping funnel at 0°C over 30 minutes. Stirring was continued at 0°C for 1 hour. The reactants were heated to 80°C over 1 hour and stirring was continued at 80°C for 1 hour. After the reaction was complete, the resulting solid substance was washed with two 50 ml portions of n-heptane and then three 50 ml portions of toluene at room temperature.

Contacting with di-n-butyl phthalate and titanium tetrachloride

The solid component obtained in the above-mentioned step was contacted with di-n-butyl phthalate and titanium tetrachloride in the same manner as in Example 2. Thus there was obtained a catalyst component containing 2.7% of titanium.

Example 33

Contacting of silicon with ethanol

Ten grams of $SiO_2$ (the same one as used in Example 1) and 1.4 g of ethanol were pulverized in a mill pot for 24 hours.

Contacting with n-butylethyl magnesium

In a 200-ml flask with a dropping funnel and stirrer, with the atmosphere therein replaced with nitrogen, were placed 6 g of the pulverized solid obtained in the above-mentioned step and 40 ml of n-heptane. Then, 9 ml of the same BEM solution as used in Example 1 was added from the dropping funnel at 0°C over 30 minutes. After the same treatment as in Example 32, there was obtained a solid component.

Contacting with di-n-butyl phthalate and titanium tetrachloride

The solid component obtained in the above-mentioned step was contacted with di-n-butyl phthalate and titanium tetrachloride in the same manner as in Example 2. Thus there was obtained a catalyst component containing 3.4% of titanium.

Example 34

In a 300-ml flask equipped with a dropping funnel and stirrer with the atmosphere therein replaced with nitrogen, were placed 5 g of $SiO_2$ (the one used in Example 1) and 13.4 ml of methanol solution containing 2 mol/liter $Mg(OC_2H_5)_2$, followed by stirring at the reflux temperature for 5 hours. Then methanol was distilled away at 60°C under reduced pressure. The resulting solid substance was contacted with di-n-butyl phthalate and titanium tetrachloride in the same manner as in Example 2. Thus there was obtained a catalyst component containing 2.7% of titanium.

Example 35

Ten grams of $SiO_2$ (the one used in Example 1) and 3 g of $Mg(OC_2H_5)_2$, were pulverized for 24 hours. The resulting pulverized solid substance was contacted with di-n-butyl phthalate and titanium tetrachloride. Thus there was obtained a catalyst component containing 3.6% of titanium.

Example 36

Preparation of magnesium dialkoxide

In a 300-ml flask, with the atmosphere therein replaced with nitrogen, were placed 25 ml (32 mmol) of 20% solution of butylethyl magnesium in n-heptane (Magala BEM, made by Texas Alkyls). To this solution was added dropwise a mixture of 10 ml (64 mmol) of 2-ethylhexanol and 20 ml of n-heptane with stirring over 15 minutes. With the flask immersed in an oil bath at 120°C, the reactants were stirred at the reflux temperature of n-heptane for 1 hour. Upon the completion of the reaction, there was obtained a colorless transparent solution of magnesium di-2-ethylhexyloxide (solution A).

Contacting with $SiO_2$

In a 200-ml flask equipped with a dropping funnel and stirrer, with the atmosphere therein replaced with nitrogen, were placed 5 g of $SiO_2$ (the one used in Example 1) and 20 ml of n-heptane. Solution A obtained in the previous step was added dropwise from the dropping funnel at room temperature over 30 minutes. The reactants were heated to 70°C and stirring was continued at 70°C for 2 hours. After the completion of reaction, the solid substance was washed with two 50 ml portions of n-heptane and then three 50 ml portions of toluene.

Contacting with di-n-butyl phthalate and titanium tetrachloride

The solid component obtained in the previous step was contacted with di-n-butyl phthalate and titanium tetrachloride in the same manner as in Example 2. Thus there was obtained a catalyst component containing 2.9% of titanium.

Examples 37 to 39

Magnesium dialkoxide was prepared in the same manner as in Example 36 except that 2-ethylhexanol was replaced by 64 mmol each of 2-heptanol (Example 37), 2-octanol (Example 38), or 1,1 - dimethyl - 1 - pentanol (Example 39) to give magnesium di - 1 - methylhexyloxide solution, magnesium di - 1 - methylheptyloxide solution, or magnesium di - 1 - dimethylpentyloxide solution, respectively. Each of the magnesium dialkoxide thus prepared was contacted with di - n - butyl phthalate and titanium tetrachloride in the same manner as in Example 2. Thus there were obtained catalyst component each containing titanium as shown below.

| Example | Alcohol | Titanium content (%) |
|---|---|---|
| 37 | 2-Heptanol | 3.8 |
| 38 | 2-Octanol | 2.9 |
| 39 | 1,1-Dimethyl-1-pentanol | 2.9 |

Example 40

In a 200-ml flask equipped with a dropping funnel and stirrer, with the atmosphere therein replaced with nitrogen, were placed 5 g of $SiO_2$ (the one used in Example 1) and 20 ml of tetrahydrofuran (THF). Then 13.4 ml of THF solution (2 mol/liter) of ethylmagnesium chloride was added, followed by stirring under reflux for 2 hours. After the completion of reaction, the resulting solid substance was washed with two 50 ml portions of THF and then with three 50 ml portions of n-heptane.

The solid component thus obtained was contacted with ethanol, di-n-butyl phthalate, and titanium tetrachloride, in the same manner as in Example 2. Thus there was obtained a catalyst component containing 2.6% of titanium.

Example 41

Solid component I was obtained in the same manner as in Example 1, except that the amount of ethanol was changed to 0.6 g (13 mmol). The solid component was contacted with di-n-butyl phthalate and titanium tetrachloride in the same manner as in Example 2. Thus there was obtained a catalyst component containing 3.8% of titanium.

Example 42

In a 200-ml flask equipped with a dropping funnel and stirrer were placed 5 g of $SiO_2$ (the one used in Example 1) and 20 ml of n-heptane and 0.6 g of di-n-butyl phthalate, followed by cooling to 0°C. Then 20 ml of BEM solution (the one used in Example 1) was added dropwise, followed by stirring at 0°C for 1 hour. A solution containing 2.9 g of ethanol in 10 ml of heptane was added dropwise over 30 minutes at 0°C, followed by stirring at 0°C for 1 hour. The reactants were heated to 80°C over 1 hour, followed by stirring for 1 hour. After the completion of reaction, the resulting solid substance was washed with five 50 ml portions of n-heptane. The resulting solid component was contacted with titanium tetrachloride in the same manner as in Example 2. Thus there was obtained a catalyst component containing 3.1% of titanium.

Comparative Example 1

Example 2 was repeated except that di-n-butyl phthalate was replaced by 1.0 g of ethyl benzoate. Thus there was obtained a catalyst component containing 2.7% of titanium.

Application Example 1

Into a 1.5-liter stainless steel autoclave equipped with a stirrer was charged under a nitrogen atmosphere a mixture prepared by mixing the following constituents, followed by standing for 5 minutes: (a) 30 mg of the catalyst component obtained in Example 1; (b) 1.13 ml of solution containing 1 mol of triethyl aluminum (abbreviated as TEAl hereinafter) in 1 liter of n-heptane; and (c) 1.13 ml of solution containing 0.1 mol of phenyltriethoxysilane (abbreviated as PES hereinafter) in 1 liter of n-heptane. Then 0.1 liters of hydrogen gas a molecular weight modifier and 1 liter of liquefied propylene were forced into the autoclave. The reaction system was heated to 70°C and the polymerization of propylene was carried out for 1 hour. After the polymerization was complete, unreacted propylene powder was purged. There was obtained 84 g of white polypropylene powder having an HI of 96.2%, an MFR of 4.9 and a bulk density of 0.42 g/cm$^3$. [Kc (amount of polymer (g) produced per gram of the catalyst component)=2,800, and Kt (amount of polymer (kg) produced per gram of titanium in the catalyst component)=78]

Application Examples 2 to 43

Polymerization of propylene was carried out in the same manner as in Application Example 1, except that the catalyst components obtained in Examples 2 to 42 and Comparative Example 1 were used. The results are shown in Table 1.

The polypropylene powder obtained in Application Example 3 was examined for particle size distribution. The results are shown below.

| Particle diameter (m) | Distribution (%) |
|---|---|
| below 149 | 0 |
| 149 to 250 | 0.1 |
| 250 to 350 | 2.2 |
| 350 to 420 | 5.9 |
| 420 to 590 | 24.6 |
| 590 to 840 | 42.7 |
| 840 to 1000 | 12.6 |
| 1000 to 1680 | 11.8 |
| above 1680 | 0.1 |

Application Example 44
Gas-phase polymerization of propylene

In a 5-liter autoclave equipped with a stirrer was placed 150 g of polypropylene powder which had previously been dried at 90°C for 4 hours in a nitrogen stream. To this autoclave were fed, while running the stirrer at 150 rpm, a catalyst component prepared in Example 2 (50 mg/hour), TEAL (0.7 mmol/hour), PES (0.05 mmol/hour), propylene (130 g/hour), and hydrogen gas (15 ml/hour). Propylene was polymerized continuously under a polymerization temperature of 70°C and a polymerization pressure of 20 kg/cm$^2$, and the polymerization product was discharged continuously. There was obtained polypropylene powder at a rate of 84 g/hour. The polymer had a MFR of 5.4 g/10 min and an HI of 95.7%.

Application Example 45
Block copolymerization of propylene

Into a 1.5-liter autoclave equipped with a stirrer was charged under a nitrogen atmosphere a mixture prepared by mixing the following constituents, followed by standing for 5 minutes: (a) 30.0 mg of the catalyst component obtained in Example 2; (b) 1.03 ml of TEAL solution (1 mol/liter) in n-heptane; and (c) 1.03 ml of PES solution (0.1 mol/liter) in n-heptane. Then 100 ml of hydrogen gas and 1 liter of liquefied propylene were forced into the autoclave. The reaction system was heated to 70°C and the homopolymerization of propylene was carried out for 1 hour. (According to the polymerization experiment carried out separately under the same condition, the resulting polypropylene had an HI of 96.7%). After the polymerization was complete, unreacted propylene was purged and the atmosphere in the autoclave was replaced with nitrogen gas. Then an ethylene-propylene mixture gas [ethylene/propylene=1.5 (molar ratio)] was introduced continuously while keeping the monomer gas pressure at 1.5 atm. Copolymerization was carried out at 70°C for 3 hours. After the polymerization was complete, unreacted mixture gas was purged. Thus there was obtained 1.55 g of propylene block copolymer.

The ratio of the copolymer portion was calculated at 26.6% on the basis of the consumption of mixture gas and the total amount of polymer produced. The content of ethylene in the total amount of the polymer was 13.1% according to infrared spectrophotometry. This translates into an ethylene content of 49% in the copolymer portion. The amounts of propylene homopolymer and copolymer portion formed per g of catalyst component were 3,800 g and 1,380 g, respectively, which were calculated from the total amount of polymer produced and the consumption of mixture gas. The block copolymer had an MFR of 3.5 g/10 min and a bulk density of 0.42 g/cm$^3$. There was no agglomeration of polymer particles and fouling did not take place at all in the autoclave.

Application Example 46
Random copolymerization of propylene and ethylene

When the polymerization of propylene was carried out as in Application Example 1, 0.6 g each of ethylene was introduced into the autoclave six times at intervals of 10 minutes, whereby random copolymerization of propylene and ethylene was carried out. After the completion of polymerization, unreacted monomers were purged from the polymerization system, and there was obtained 120 g of propylene-ethylene random copolymer. The copolymer was found to contain 2.6% of ethylene according to infrared spectrophotometry. The amount of the copolymer formed per g of catalyst component were 4,800 g. The block copolymer had an MFR of 13.5 g/10 min and a bulk density of 0.41 g/cm$^3$.

Application Example 47
Polymerization of 1-butene

Polymerization of 1-butene was performed in the same manner as in Application Example 1 except that

150 mg of catalyst component obtained in Example 2 was used, 400 ml of isobutane was used as a medium, liquefied propylene was replaced by 400 ml of 1-butene (liquid), the polymerization temperature was 40°C, and the polymerization, time was 5 hours. There was obtained 195 g of powder poly-1-butene. Kc was 1,300 g/g-catalyst component. The polymer had an MFR of 1.7 g/10 min. and a bulk density of 0.40 g/cm$^3$. The amount of ether insolubles (residues remaining after extraction with boiling diethyl ether for 5 hours) was 99.2%.

Application Example 48
Polymerization of 4-methyl-1-pentene

Polymerization of 4-methyl-1-pentene was performed in the same manner as in Application Example 1 except that 130 mg of catalyst component obtained in Example 2 was used, propylene was replaced by 400 ml of 4-methyl-1-pentene, and the polymerization time was 6 hours. There was obtained 167 g of powder poly-4-methyl-1-pentene. Kc was 1,280 g/g-catalyst component. The polymer had an MFR of 4.2 g/10 min, a bulk density of 0.36 g/cm$^3$ and an HI of 96.6%.

Application Example 49

Polymerization of propylene was performed in the same manner as in Application Example 2 except that the PES solution was replaced by 0.75 ml of solution containing 0.5 mol of ethyl p-anisate in 1 liter of n-heptane. Kc was 2,000 g/g-catalyst component, Kt was 61 kg/g-Ti, HI was 94.4%, MFR was 7.3 g/10 min, and bulk density was 0.39 g/cm$^3$.

TABLE 1

| Application Example | Catalyst component | Kc (g/g · cat) | Kt (kg/g · Ti) | HI (%) | MFR (g/10 min) | Bulk density (g/cm$^3$) |
|---|---|---|---|---|---|---|
| 2 | Example 2 | 3,800 | 115 | 96.8 | 4.3 | 0.43 |
| 3 | Example 3 | 3,600 | 113 | 96.7 | 5.1 | 0.40 |
| 4 | Example 4 | 3,600 | 113 | 96.6 | 4.8 | 0.42 |
| 5 | Example 5 | 2,700 | 79 | 96.1 | 7.2 | 0.41 |
| 6 | Example 6 | 2,400 | 83 | 95.9 | 4.3 | 0.41 |
| 7 | Example 7 | 2,500 | 86 | 96.1 | 5.4 | 0.42 |
| 8 | Example 8 | 3,100 | 115 | 96.5 | 7.3 | 0.41 |
| 9 | Example 9 | 2,900 | 121 | 96.9 | 8.4 | 0.42 |
| 10 | Example 10 | 3,200 | 91 | 95.9 | 4.8 | 0.41 |
| 11 | Example 11 | 2,700 | 87 | 96.0 | 6.2 | 0.40 |
| 12 | Example 12 | 2,200 | 85 | 95.5 | 5.5 | 0.39 |
| 13 | Example 13 | 2,100 | 88 | 95.9 | 8.7 | 0.41 |
| 14 | Example 14 | 3,500 | 113 | 96.6 | 5.3 | 0.42 |
| 15 | Example 15 | 3,100 | 103 | 96.5 | 4.7 | 0.41 |
| 16 | Example 16 | 2,700 | 87 | 96.1 | 7.2 | 0.41 |
| 17 | Example 17 | 3,400 | 110 | 96.6 | 5.1 | 0,42 |
| 18 | Example 18 | 3,100 | 107 | 96.4 | 4.6 | 0.42 |
| 19 | Example 19 | 2,400 | 92 | 95.8 | 3.6 | 0.41 |
| 20 | Example 20 | 3,900 | 130 | 96.7 | 5.8 | 0.43 |

TABLE 1 (contd.)

| Application Example | Catalyst component | Kc (g/g · cat) | Kt (kg/g · Ti) | HI (%) | MFR (g/10 min) | Bulk density (g/cm$^3$) |
|---|---|---|---|---|---|---|
| 21 | Example 21 | 2,600 | 79 | 95.9 | 8.3 | 0.40 |
| 22 | Example 22 | 2,200 | 69 | 95.6 | 4.2 | 0.40 |
| 23 | Example 23 | 2,800 | 56 | 95.8 | 5.8 | 0.39 |
| 24 | Example 24 | 3,300 | 97 | 96.4 | 8.9 | 0.41 |
| 25 | Example 25 | 3,700 | 112 | 96.5 | 7.5 | 0.42 |
| 26 | Example 26 | 2,400 | 89 | 95.6 | 6.5 | 0.40 |
| 27 | Example 27 | 3,000 | 111 | 96.0 | 4.4 | 0.41 |
| 28 | Example 28 | 2,700 | 87 | 96.1 | 5.2 | 0.41 |
| 29 | Example 29 | 2,600 | 87 | 96.1 | 4.8 | 0.40 |
| 30 | Example 30 | 1,800 | 60 | 95.2 | 7.3 | 0.39 |
| 31 | Example 31 | 3,400 | 97 | 96.5 | 6.1 | 0.43 |
| 32 | Example 32 | 2,900 | 107 | 96.7 | 4.3 | 0.42 |
| 33 | Example 33 | 3,500 | 103 | 96.5 | 7.7 | 0.42 |
| 34 | Example 34 | 2,300 | 85 | 96.0 | 5.6 | 0.40 |
| 35 | Example 35 | 3,700 | 103 | 96.4 | 8.8 | 0.42 |
| 36 | Example 36 | 3,200 | 110 | 96.4 | 5.7 | 0.42 |
| 37 | Example 37 | 2,800 | 100 | 96.1 | 6.2 | 0.41 |
| 38 | Example 38 | 2,900 | 100 | 96.1 | 3.5 | 0.40 |
| 39 | Example 39 | 2,600 | 90 | 96.0 | 5.8 | 0.39 |
| 40 | Example 40 | 2,100 | 81 | 95.9 | 3.7 | 0.40 |
| 41 | Example 41 | 2,600 | 68 | 95.3 | 4.5 | 0.40 |
| 42 | Example 42 | 3,500 | 113 | 96.7 | 4.6 | 0.42 |
| 43 | Comparative Example 1 | 1,200 | 44 | 92.3 | 3.6 | 0.38 |

## Claims

1. A supported titanium-containing catalyst component obtained by contacting (A) a metal oxide (B), a magnesium hydrocarbyloxide, (C) a polybasic aromatic acid or derivative thereof, having a carboxyl group at the ortho position, (D) a di, tri or tetravalent titanium compound with one another.

2. The supported titanium-containing catalyst component of Claim 1 wherein the (A) metal oxide is selected from the group of elements in Groups II to IV of the Periodic Table, the (B) magnesium hydrocarbyloxide is represented by the formula

$$Mg(OR^1)_p(OR^2)_qR^3_rR^4_sX_t,$$

wherein $R^1$, $R^2$, $R^3$ and $R^4$ are the same or different alkyl, alkenyl, cycloalkyl, aryl, or aralkyl groups having from 1 to 20 carbon atoms, X is a halogen atom, p or q are greater than 0 and p+q+r+s+t=2, the (C) derivatives of the polybasic aromatic carboxylic acids include acid anhydrides, acid halides, acid monoesters, polyesters, acid amides, nitriles, and imides of the carboxylic acid, and the (D) titanium compound is $TiCl_4$.

3. The supported titanium-containing catalyst component of Claim 1 wherein the (A) metal oxide is contacted with the magnesium hydrocarbyloxide at a temperature in the range of −20°C to 150°C for 0.1 to 100 hours to obtain contact product (a); contact product (a) is thereafter contacted with the (C) carboxylic acid or derivative thereof and the (D) titanium compound in any order or simultaneously.

4. A catalyst system comprising (I) a supported titanium-containing catalyst component obtained by contacting (A) a metal oxide, (B) a magnesium hydrocarbyloxide, (C) a polybasic aromatic acid or derivative thereof, having a carboxyl group at the ortho position, (D) a di, tri or tetravalent titanium compound with one another, and (II) an organic compound of a metal of Groups I to III of the Periodic Table.

5. The catalyst system of Claim 4 wherein the (A) metal oxide is selected from the group of elements in Groups II to IV of the Periodic Table, the (B) magnesium hydrocarbyloxide is represented by the formula

$$Mg(OR^1)_p(OR^2)_qR^3_rR^4_sX_t,$$

wherein $R^1$, $R^2$, $R^3$ and $R^4$ are the same or different alkyl, alkenyl, cycloalkyl, aryl, or aralkyl groups having from 1 to 20 carbon atoms, X is a halogen atom, p or q are greater than 0 and p+q+r+s+t=2, the (C) derivatives of the polybasic aromatic carboxylic acids include acid anhydrides, acid halides, acid monoesters, polyesters, acid amides, nitriles, and imides of the carboxylic acid, and the (D) titanium compound is $TiCl_4$.

6. A process for the polymerization or copolymerization of olefins which comprises contacting one or more olefins with a catalyst system comprising (I) a supported titanium-containing catalyst component obtained by contacting (A) a metal oxide, (B) a magnesium hydrocarbyloxide, (C) a polybasic aromatic acid or derivative thereof, having a carboxyl group at the ortho position, (D) a di, tri or tetravalent titanium compound with one another, and (II) an organic compound of a metal of Groups I to III of the Periodic Table.

7. The process in accordance with Claim 6 wherein an alphamonoolefin having from 2 to 10 carbon atoms is homopolymerized.

8. The process in accordance with Claim 6 wherein an alphamonoolefin having from 2 to 10 carbon atoms is (co)polymerized with another alpha-monoolefin or diolefin having from 3 to 10 carbon atoms.

9. The process in accordance with Claim 7 wherein the alpha-monoolefin has from 3 to 6 carbon atoms.

10. The process in accordance with Claim 9 wherein the alpha-monoolefin is propylene.

**Patentansprüche**

1. Geträgerte titanhaltige Katalysatorkomponente, erhalten durch Inkontaktbringen von (A) einem Metalloxid, (B) einem Magnesiumhydrocarbyloxid, (C) einer polybasischen aromatischen Säure oder deren Derivat, die eine Carboxylgruppe in der ortho-Stellung aufweist und (D) einer di-, tri- oder tetravalenten Titanverbindung.

2. Geträgerte titanhaltige Katalysatorkomponente nach Anspruch 1, worin das (A) Metalloxid aus der Gruppe der Elemente der Gruppen II bis IV des Periodischen Systems ausgewählt ist das (B) Magnesiumhydrocarbyloxid der allgemeinen Formel

$$Mg(OR^1)_p(OR^2)_qR^3_rR^4_sX_t$$

entspricht, worin $R^1$, $R^2$, $R^3$ und $R^4$ gleiche oder verschiedene Alkyl-, Alkenyl-, Cycloalkyl-, Aryl- oder Aralkylgruppen mit 1 bis 20 Kohlenstoffatomen sind, X ein Halogenatom ist, p oder q größer als 0 sind und p+q+r+s+t=2, die (C) Derivate der polybasischen aromatischen Carbonsäuren Säureanhydride, Säurehalogenide, Säuremonoester, Polyester, Säureamide, Nitrile und Imide von Carbonsäuren umfassen und die (D) Titanverbindung $TiCl_4$ ist.

3. Geträgerte titanhaltige Katalysatorkomponente nach Anspruch 1, worin das (A) Metalloxid mit dem Magnesiumhydrocarboxyloxid bei einer Temperatur in Bereich von −20°C bis 150°C für 0,1 bis 100 Stunden in Kontakt gebracht wird um das Produkt (a) zu erhalten; das Kontaktprodukt (a) anschließend mit der (C) Carbonsäure oder ihrem Derivat und der (D) Titanverbindung in jeder Reihenfolge oder gleichzeitig in Kontakt gebracht wird.

4. Katalysatorsystem, enthaltend (I) eine geträgerte titanhaltige Katalysatorkomponente, erhalten durch Inkontaktbringen von (A) einem Metalloxid, (B) einem Magnesiumhydrocarbyloxid, (C) eine polybasischen aromatischen Säure oder deren Derivat, die eine Carboxylgruppe in der ortho-Stellung aufweist, (D) einer di, tri- oder tetravalenten Titanverbindung, und (II) eine organische Verbindung eines Metalles aus den Gruppen I bis II des Periodischen Systems.

5. Katalysatorsystem nach Anspruch 4, worin das (A) Metalloxid aus der Gruppe der Elemente der Gruppen II bis IV des Periodischen Systems ausgewählt ist, das (B) Magnesiumhydrocarbyloxid der allgemeinen Formel

$$Mg(OR^1)_p(OR^2)_qR^3_rR^4_sX_t$$

entspricht, worin $R^1$, $R^2$, $R^3$ und $R^4$ gleich oder verschiedene Alkyl-, Alkenyl-, Cycloalkyl-, Aryl- oder Aralkylgruppen mit 1 bis 20 Kohlenstoffatomen sind, X ein Halogenatom ist, p oder q größer als 0 sind und p+q+r+s+t=2 ist, die (C) Derivate der polybasischen aromatischen Carbonsäuren Säureanhydride, Säurehalogenide, Säuremonoester, Polyester, Säureamide, Nitrile und Imide der Carbonsäure umfassen und die (D) Titanverbindung $TiCl_4$ ist.

6. Verfahren zur Polymerisation oder Copolymerisation von Olefinen, bei dem man eines oder mehrere Olefine mit einem Katalysatorsystem enthaltend (A) eine geträgerte titanhaltige Katalysatorkomponente, erhalten durch Inkontaktbringen von (A) einem Metalloxid, (B) einem Magnesiumhydrocarbyloxid, (C) einer polybasischen aromatischen Säure oder deren Derivat, die eine Carboxylgruppe in der ortho-Stellung aufweist, (D) eine di-, tri- oder tetravalenten Titanverbindung und (II) eine organische Verbindung eines Metalls der Gruppen I bis III des Periodischen Systems in Kontakt bringt.

7. Verfahren nach Anspruch 6, bei dem man ein alpha-Monoolefin mit 2 bis 10 Kohlenstoffatomen homopolymerisiert.

8. Verfahren nach Anspruch 6, bei dem man ein alpha-Monoolefin mit 2 bis 10 Kohlenstoffatomen mit einem anderen alpha-Monoolefin oder Diolefin mit 3 bis 10 Kohlenstoffatomen (co)polymerisiert.

9. Verfahren nach Anspruch 7, bei dem das alpha-Monoolefin 3 bis 6 Kohlenstoffatome aufweist.

10. Verfahren nach Anspruch 9, bei dem das alpha-Monoolefin Propylen ist.

**Revendications**

1. Composant de catalyseur contentant du titane fixé sur un support, obtenu par mise en contact, les uns avec les autres (A) d'un oxyde de métal, (B) d'un hydrocarbylate de magnésium, (C) d'un polyacide aromatique ou d'un dérivé de ce polyacide, portant un groupe carboxyle en position ortho, (D) d'un composé de titane divalent, trivalent ou tétravalent.

2. Composant de catalyseur contenant du titane fixé sur un support suivant la revendication 1, dans lequel l'oxyde métallique (A) est choisi parmi les éléments des Groupes II à IV du Tableau Périodique, l'hydrocarbylate de magnésium (B) est représenté par la formule

$$Mg(OR^1)_p(OR^2)_qR^3_rR^4_sX_t$$

dans laquelle $R^1$, $R^2$, $R^3$ et $R^4$ sont des groupes alkyle, alcényle, cycloalkyle, aryle ou aralkyle identiques ou différentes ayant 1 à 20 atomes de carbone, X est un atome d'halogène, p ou q sont supérieurs à 0 et la somme p+q+r+s+t est égale à 2, les dérivés (C) des acids polycarboxyliques aromatiques comprennent des anhydrides d'acide, des halogénures d'acides, des monoesters d'acides, des polyesters, des amides d'acides, des nitriles et des imides de l'acide carboxylique et le composé de titane (D) est $TiCl_4$.

3. Composant de catalyseur contenant du titane fixé sur un support suivant la revendication 1, dans lequel l'oxyde métallique (A) est mis en contact avec l'hydrocarbylate de magnésium à une température comprise dans l'intervalle de −20°C à 150°C pendant 0,1 à 100 heures de manière à obtenir un produit de contact (a); le produit de contact (a) est ensuite mis en contact avec l'acide carboxylique ou son dérivé (C) et le composé de titane (D) dans un ordre quelconque ou simultanément.

4. Catalyseur comprenant (I) un composant de catalyseur contenant du titane fixé sur un support obtenu par mise en contact les uns avec les autres d'un oxyde métallique (A), d'un hydrocarbylate de magnésium (B), d'un polyacide aromatique ou de son dérivé (C), portant un groupe carboxyle en position ortho, (D) d'un composé de titane divalent, trivalent ou tétravalent, et (II) un composé organique d'un métal des Groupes I à III du Tableau Périodique.

5. Catalyseur suivant la revendication 4, dans lequel l'oxyde de métal (A) est choisi parmi les éléments des Groupes II à IV du Tableau Périodique, l'hydrocarbylate de magnésium (B) est représenté par la formule

$$Mg(OR^1)_p(OR^2)_qR^3_rR^4_sX_t$$

dans laquelle $R^1$, $R^2$, $R^3$ et $R^4$ sont des groupes alkyle, alcényle, cycloalkyle, aryle ou aralkyle identiques ou différents ayant 1 à 20 atomes de carbone, X est un atome d'halogène p ou q sont supérieurs à 0 et la somme p+q+r+s+t est égale à 2, les dérivés (C) des polyacides carboxyliques aromatiques comprennent des anhydrides d'acides, des halogénures d'acides, des monoesters d'acides, des polyesters, des amides d'acides, des nitriles et de imides de l'acide carboxylique et le composé de titane (D) est $TiCl_4$.

6. Procédé de polymérisation ou de copolymérisation d'oléfines, qui consiste à mettre en contact une ou plusieurs oléfines avec un catalyseur comprenant (I) un composant de catalyseur contenant du titane fixé sur un support obtenu par mise en contact, les uns avec les autres, (A) d'un oxyde métallique, (B) d'un hydrocarbylate de magnésium (C) d'un polyacide aromatique ou d'un dérivé de ce polyacide portant un group carboxyle en position ortho, (D) d'un composé de titane divalent, trivalent ou tétravalent, et (II) un composé organique d'un métal des Groupes I à III du Tableau Périodique.

7. Procédé suivant la revendication 6, dans lequel une alpha-mono-oléfine ayant 2 à 10 atomes de carbone est homopolymérisée.

8. Procédé suivant la revendication 6, dans lequel une alpha-mono-oléfine ayant 2 à 10 atomes de carbone est (co)polymérisée avec une autre alpha-mono-oléfine ou dioléfine ayant 3 à 10 atomes de carbone.

9. Procédé suivant la revendication 7, dans lequel l'alpha-mono-oléfine a 3 à 6 atomes de carbone.

10. Procédé suivant la revendication 9, dans lequel l'alpha-mono-oléfine est le propylène.